# EUROPEAN PATENT SPECIFICATION

(11) **EP 1 290 334 B1**
(45) Date of publication and mention of the grant of the patent: **18.01.2006**
(21) Application number: 01962713.2
(22) Date of filing: 06.06.2001
(51) Int. Cl.: F02M 37/22, B01D 36/00

(54) **FILTER FOR DIESEL ENGINE FUEL**
FILTER FÜR DIESELKRAFTSTOFF
FILTRE DE CARBURANT DIESEL DE MOTEUR

(30) Priority: 12.06.2000 IT MI001311
(43) Date of publication of application: 12.03.2003
(73) Proprietor: Sogefi Filtration S.p.a., 46100 Mantova (IT)
(72) Inventor: BARACCHI, Paolo, I-10155 Torino (IT); CROVETTI, Claudio, I-46100 Mantova (IT); TALLANO, Sergio, I-46047 Porto Mantovano (IT)
(74) Representative: Modiano, Micaela Nadia
(86) International application number: PCT/EP2001/006393
(87) International publication number: WO 2001/096731

(56) References cited:
- EP-A- 0 106 737
- EP-A- 0 150 120
- EP-A- 1 081 371
- DE-A- 3 701 259
- DE-C- 3 212 963
- GB-A- 2 047 108
- PATENT ABSTRACTS OF JAPAN vol. 008, no. 146 (M-307), 7 July 1984 (1984-07-07) & JP 59 041654 A (TSUCHIYA SEISAKUSHO:KK), 7 March 1984 (1984-03-07)

## Description

### Technical Field

The invention relates to a filter for Diesel engine fuel.

### Background Art

It is known that filters inserted on the supply circuit of Diesel engine fuel, commonly known as Diesel fuel, comprise, inside an enclosure, a filtering mass provided with means adapted to separate the water contained in said fuel: while the Diesel fuel circulates inside the filter between an intake connector and a discharge connector, encountering said filtering mass, the separated water collects on the bottom of the enclosure of the filter in order to be evacuated periodically.

Accordingly, for this purpose there is a duct for connection to an appropriately provided container which is controlled by a pilot-operated valve, such as an electric valve or a pneumatic valve, activated by a sensor which has an independent surface and which, by detecting that the water has reached a maximum level, sends an opening command to such valve; when the minimum level is reached, the same sensor, or a different one, sends a closure command in order to prevent the escape of Diesel fuel.

Any anomaly in the pilot-operated valve is indicated by a waming indicator on the vehicle dashboard which lights up and remains lit when the sensor detects the presence of water; in normal operation, such an indicator switches off immediately after the valve has opened, with a consequent drop in the water level.

GB-A-2 047 108 discloses a filter having a combination of features as set forth in the precharacterizing portion of the appended claim 1.

### Disclosure of the Invention

In the prior art, the installation of a system as described above accounts for a significant percentage of the cost of the entire filter; accordingly, the aim of the present invention is to provide a filter for Diesel engine fuel in which the installation of the pilot-operated valve with the corresponding sensor achieves a limited cost.

Within this aim, an object of the invention is to provide a filter which allows to simply and rapidly remedy any malfunctions of the pilot-operated valve and can be easily drained in any situation.

In accordance with the invention, there is provided a filter for Diesel engine fuel, as defined in the appended claims.

### Brief description of the drawings

Further characteristics and advantages of the invention will become better apparent from the description of two preferred but not exclusive embodiments of the invention, illustrated only by way of non-limitative examples in the accompanying drawings, wherein:
Figure 1 is a partial sectional view of the filter according to the invention in normal operation;
Figure 2 is a view of a portion of the filter according to the invention in a different condition;
Figure 3 is a view of a portion of the invention according to a another embodiment.

### Ways of carrying out the Invention

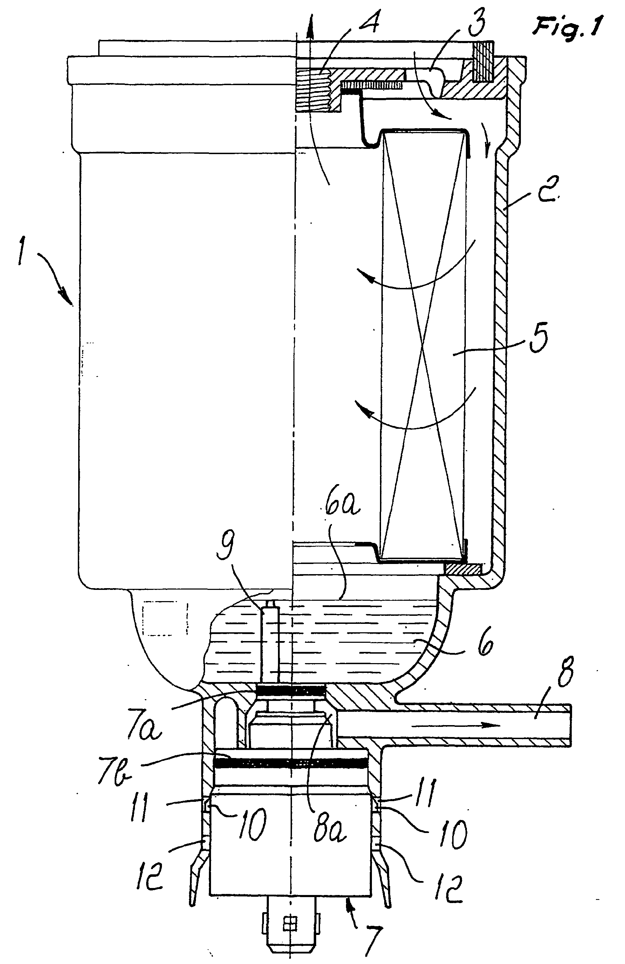

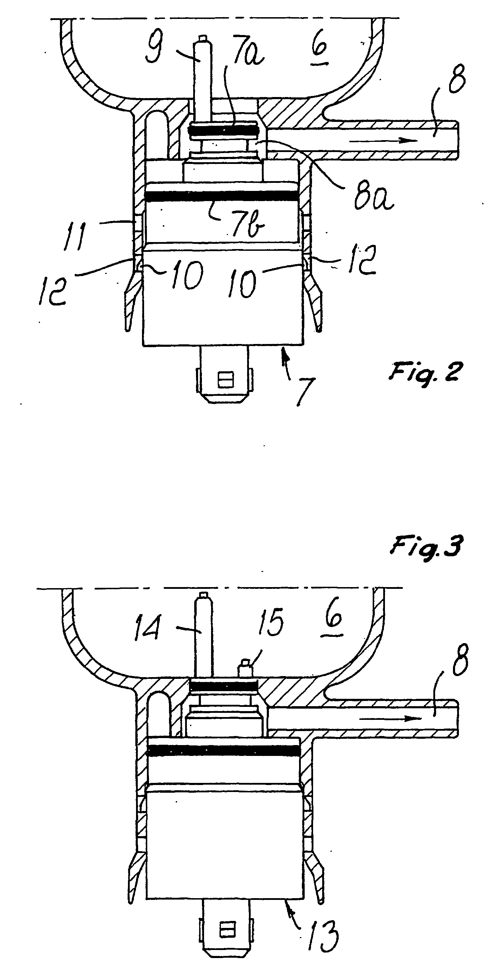

With reference to the above Figures 1 and 2, the reference numeral 1 generally designates a filter which comprises a per se known structure which is adapted to determine, inside the enclosure 2, the circulation of the Diesel fuel indicated by the arrows in the figure between the intake connector 3 and the discharge connector 4, passing through the filtering mass 5; the water contained in the Diesel fuel is retained by an appropriately provided means, not shown in the figure, which is comprised within the filtering mass 5, and falls into the water collection chamber 6 provided at the bottom of the enclosure 2.

The reference numeral 7 further designates an electric valve which is associated, by means of a bayonet coupling, with the bottom of the enclosure 2 so as to control the duct 8 for conveying the water to an appropriately provided container and is provided with the variable-resistance sensor 9 incorporated therein and sends a signal to the system that operates the valve in order to actuate the opening of the valve, with consequent passage of the water into the portion of space 8a, which gives access to the duct 8, when the water reaches the maximum level 6a shown in the figure, and sends a valve closure signal when the water reaches the minimum level, so as to avoid escape of Diesel fuel.

It is noted first of all that the system that operates the electric valve 7 can equally be comprised within the control devices installed on board the vehicle equipped with the filter or be incorporated within the electric valve proper.

The normal operating condition is shown in Figure 1: the electric valve 7 is arranged so that the reference teeth, such as 10, are inserted in the slots, such as 11, which are formed in a protrusion of the enclosure, and the gasket 7a ensures watertightness between the collection chamber 6 and the portion of space 8a that gives access to the duct 8.

In case of malfunction of the electric valve 7, indicated by a warning light on the dashboard of the vehicle on which the filter is installed, or for example when the filter is disassembled, the user proceeds manually, causing the lowering of the electric valve to the position shown in Figure 2, with insertion of the teeth such as 10 in the slots such as 12, thus clearing the connection between the collection chamber 6 and the portion of space 8a, so as to allow the water to escape through the duct 8; in this step the gasket 7b is active.

In the embodiment shown in Figure 3, the only variation with respect to what has been described above consists in that the electric valve 13 is provided with two built-in sensors, specifically the sensor 14, which detects the maximum level of the water in the collection chamber 6 and sends a signal for opening the electric valve, and the sensor 15, which sends a signal for closing the electric valve when the minimum level is reached.

The described invention is susceptible of numerous other modifications and variations, all of which are within the scope of the appended claims: thus, for example, the electric valve can be replaced with a pilot-operated valve of any kind, such as for example a pneumatic valve.

The pilot-operated valve may also control the water conveyance duct when it is in the lowermost position of its stroke and the connection between the bottom of the container and said duct can be opened by moving said valve to the uppermost position.

The valve- can further be stably associated with the bottom of the filter, and in this case its flow control element can be provided with manual actuation means for interventions in case of malfunction.

In the practical execution of the invention, all the details may be replaced with other technically equivalent elements; the materials used, as well as the shapes and the dimensions, may further be any according to requirements.

## Claims

1. A filter for Diesel engine fuel, comprising a filtering mass (5) which is contained within an enclosure (2) and is designed to be crossed by the fuel in its path inside the filter between an intake connector (3) and a discharge connector (4) and is provided with means (5) for separating the water contained in the Diesel fuel, said enclosure (2) comprising a water collection chamber (6) at the bottom, the filter further comprising a pilot-operated valve (7) which is associated with the bottom of the enclosure (2) and is suitable to control a duct (8) for conveying the water to a specifically provided container, the valve (7) having incorporated therein at least one water level sensor (9) which is adapted to control a system that operates the valve (7), **characterized in that** the pilot-operated valve (7) is associated with the bottom of the enclosure (2) of the filter (1) and is movable by manual actuation between two end positions, respectively for blocking the water conveyance duct (8) and for opening the connection between the bottom of the enclosure (2) and said duct (8).

2. The filter according to claim 1, **characterized in that** the pilot-operated valve (7) comprises a built-in variable-resistance sensor (9) which is adapted to send to the system that operates the valve (7) a maximum water level signal and a minimum water level signal so as to actuate the opening and the closure of said valve (7), respectively.

3. The filter according to claim 1, **characterized in that** the pilot-operated valve (7) comprises a built-in maximum water level sensor (14) and a built-in minimum water level sensor (15) which are suitable to send to the system that operates the valve (7) a signal for opening and closing said valve (7), respectively.

4. The filter according to one or more of the preceding claims, **characterized in that** the pilot-operated valve (7) is an electric valve with a driving system which is comprised within the control devices installed on board the vehicle equipped with the filter.

5. The filter according to one or more of the preceding claims 1-3, **characterized in that** the pilot-operated valve (7) is an electric valve with a control system which is built into said valve (7).

6. The filter according to one or more of the preceding claims, **characterized in that** the pilot-operated valve (7) is stably associated with the bottom of the enclosure (2) of the filter (1) and its flow control element (7a,7b) is provided with manual actuation means.

## Patentansprüche

1. Ein Filter für Dieselmotorkraftstoff bestehend aus einer Filtermasse (5), welche in einem Gehäuse (2) eingeschlossen ist und so konstruiert ist, dass sie von dem Kraftstoff auf seinem Weg in dem Filter zwischen einem Einlassverbindungsstück (3) und einem Auslassverbindungsstück (4) durchquert wird und mit Mitteln (5) zur Abscheidung von in dem Dieselkraftstoff enthaltenen Wasser versehen ist, wobei dieses Gehäuse (2) einen Wassersammelbehälter (6) an der Unterseite aufweist, der Filter weiter ein ferngesteuertes Ventil (7) beinhaltet, das mit dem Boden des Gehäuses (2) verbunden ist und geeignet ist, eine Leitung (8) zur Zuführung von Wasser zu einem speziell vorgesehenen Behälter zu steuern, wobei das Ventil (7) wenigstens einen Wasserstandssensor (9) beinhaltet, der so angepasst ist, dass er ein System, welches das Ventil (7) betätigt, steuert, **dadurch gekennzeichnet, dass** das ferngesteuerte Ventil (7) mit dem Boden des Gehäuses (2) des Filters (1) verbunden ist und durch manuelle Betätigung zwischen den beiden Endpositionen bewegt werden kann, zum Versperren der Wasserbeförderungsleitung (8) bzw. zum Öffnen der Verbindung zwischen dem Boden des Gehäuses (2) und dieser Leitung.

2. Filter nach Anspruch 1, **dadurch gekennzeichnet, dass** das ferngesteuerte Ventil (7) einen eingebauten variablen Widerstandssensor (9) aufweist, der so angepasst ist, dass er dem System, welches das Ventil (7) betätigt, ein maximales Wasserstandssignal und ein minimales Wasserstandssignal sendet, um das Öffnen bzw. Schließen des Ventils (7) zu bewirken.

3. Filter nach Anspruch 1, **dadurch gekennzeichnet, dass** das ferngesteuerte Ventil (7) einen eingebauten maximalen Wasserstandssensor (14) und einen eingebauten minimalen Wasserstandssensor (15) beinhaltet, die geeignet sind dem System, welches das Ventil (7) betätigt, ein Signal zum Öffnen bzw. Schließen des Ventils zu senden.

4. Filter nach einem oder mehreren der vorhergehenden Ansprüche, **dadurch gekennzeichnet, dass** das ferngesteuerte Ventil (7) ein elektrisch gesteuertes Ventil mit einem Antriebssystem ist, welches in den Steuereinrichtungen an Bord des mit dem Filter (1) ausgestatteten Fahrzeugs enthalten ist.

5. Filter nach einem oder mehreren der vorhergehenden Ansprüche 1-3, **dadurch gekennzeichnet, dass** das ferngesteuerte Ventil (7) ein elektrisches Ventil mit einem in diesem Ventil (7) eingebauten Steuersystem ist.

6. Filter nach einem oder mehreren der vorhergehenden Ansprüche, **dadurch gekennzeichnet, dass** das ferngesteuerte Ventil (7) fest mit der Unterseite des Gehäuses (2) des Filters (1) verbunden ist und sein Durchflussregelelement (7a, 7b) mit manuellen Betätigungsmitteln versehen ist.

## Revendications

1. Filtre pour carburant de moteur Diesel, comprenant une masse filtrante (5) qui est contenue dans une enceinte (2) et est conçue pour être traversée par le carburant dans son trajet à l'intérieur du filtre entre un raccord d'admission (3) et un raccord d'évacuation (4) et est munie de moyens (5) pour séparer l'eau contenue dans le carburant Diesel, ladite enceinte (2) comprenant une chambre de collecte d'eau (6) au fond, le filtre comprenant de plus une valve à asservissement (7) qui est associée au fond de l'enceinte (2) et est destinée à commander un conduit (8) pour amener l'eau vers un récipient prévu de façon spécifique, la valve (7) incorporant dans celle-ci au moins un capteur de niveau d'eau (9) qui est adapté pour commander un système qui fait fonctionner la valve (7), **caractérisé en ce que** la valve à asservissement (7) est associée au fond de l'enceinte (2) du filtre (1) et est mobile par actionnement manuel entre deux positions d'extrémité, respectivement pour fermer le conduit d'amenée de l'eau (8) et pour ouvrir le raccord entre le fond de l'enceinte (2) et ledit conduit (8).

2. Filtre selon la revendication 1,
**caractérisé en ce que** la valve à asservissement (7) comprend un capteur à résistance variable intégré (9) qui est adapté pour envoyer au système qui fait fonctionner la valve (7), un signal de niveau d'eau maximum et un signal de niveau d'eau minimum de façon à actionner l'ouverture et la fermeture de ladite valve (7), respectivement.

3. Filtre selon la revendication 1, **caractérisé en ce que** la valve à asservissement (7) comprend un capteur de niveau d'eau maximum intégré (14) et un capteur de niveau d'eau minimum intégré (15) qui sont appropriés pour envoyer au système qui fait fonctionner la valve (7), un signal pour ouvrir et fermer ladite valve (7), respectivement.

4. Filtre selon une ou plusieurs des revendications précédentes, **caractérisé en ce que** la valve à asservissement (7) est une valve électrique avec un système d'entraînement qui est compris dans les dispositifs de commande installés à bord du véhicule équipé du filtre.

5. Filtre selon une ou plusieurs des revendications précédentes 1-3,
**caractérisé en ce que** la valve à asservissement (7) est une valve électrique avec un système de commande qui est intégré dans ladite valve (7).

6. Filtre selon une ou plusieurs des revendications précédentes,
**caractérisé en ce que** la valve à asservissement (7) est associée de façon stable au fond de l'enceinte (2) du filtre (1) et son élément de contrôle de flux (7a, 7b) est muni de moyens d'actionnement manuels.
